# EUROPEAN PATENT SPECIFICATION

(11) **EP 3 224 834 B1**
(45) Date of publication and mention of the grant of the patent: **07.11.2018**
(21) Application number: 15800816.9
(22) Date of filing: 24.11.2015
(51) Int. Cl.: G10L 21/10, G10L 21/055, G10L 15/14, G10H 1/36, G10L 15/26

(54) **APPARATUS AND METHOD FOR GENERATING VISUAL CONTENT FROM AN AUDIO SIGNAL**
VORRICHTUNG UND VERFAHREN ZUR ERZEUGUNG VISUELLER INHALTE AUS EINEM AUDIOSIGNAL
APPAREIL ET PROCÉDÉ PERMETTANT DE GÉNÉRER UN CONTENU VISUEL D'UN SIGNAL AUDIO

(30) Priority: 27.11.2014 EP 14306898
(43) Date of publication of application: 04.10.2017
(73) Proprietor: Thomson Licensing, 92130 Issy-les-Moulineaux (FR)
(72) Inventor: GUEGAN, Marie, 35576 Cesson-Sevigne (FR); OZEROV, Alexey, 35576 Cesson-Sevigne (FR)
(74) Representative: Vidon Brevets & Stratégie
(86) International application number: PCT/EP2015/077562
(87) International publication number: WO 2016/083414

(56) References cited:
- Boris Guenebaut: "Automatic Subtitle Generation for Sound in Videos Author", 2009:TAPRO 02, 2 May 2009 (2009-05-02), pages 1-35, XP055178994, Retrieved from the Internet: URL:http://hv.diva-portal.org/smash/get/di va2:241802/FULLTEXT01.pdf [retrieved on 2015-03-24]
- ANTOINE LIUTKUS ET AL: "Adaptive filtering for music/voice separation exploiting the repeating musical structure", 2012 IEEE INTERNATIONAL CONFERENCE ON ACOUSTICS, SPEECH AND SIGNAL PROCESSING (ICASSP 2012) : KYOTO, JAPAN, 25 - 30 MARCH 2012 ; [PROCEEDINGS], IEEE, PISCATAWAY, NJ, 25 March 2012 (2012-03-25), pages 53-56, XP032227060, DOI: 10.1109/ICASSP.2012.6287815 ISBN: 978-1-4673-0045-2
- Anonymous: "TuneWiki - Wikipedia, the free encyclopedia", Wikipedia, 19 November 2014 (2014-11-19), XP055179087, Retrieved from the Internet: URL:http://en.wikipedia.org/w/index.php?ti tle=TuneWiki&oldid=634597910 [retrieved on 2015-03-25]
- Guan-Xiang Wang ET AL: "BAYESIAN SINGING-VOICE SEPARATION", ISMIR 2014, 27 October 2014 (2014-10-27), XP055179014, Retrieved from the Internet: URL:http://www.music-ir.org/mirex/abstract s/2014/GW1.pdf [retrieved on 2015-03-24]

## Description

### TECHNICAL FIELD OF THE INVENTION

The present disclosure generally relates to multimedia entertainment systems. More particularly, the present disclosure relates to generation and automatic creation of visual content, such as lyric text or a karaoke track, from audio content simultaneous with the playback of the audio content.

### BACKGROUND OF THE INVENTION

This section is intended to introduce the reader to various aspects of art, which may be related to the present embodiments that are described below. This discussion is believed to be helpful in providing the reader with background information to facilitate a better understanding of the various aspects of the present disclosure. Accordingly, it should be understood that these statements are to be read in this light.

Karaoke is a form of interactive entertainment or video game in which amateur singers sing along with recorded music (a music video) using a microphone and an audio reproduction system. The music is typically a well-known popular song with the lead vocal content removed. Lyrics from the song are usually displayed on a video screen, along with a moving symbol, a changing color, or other music video images, to guide the singer.

Karaoke remains a popular entertainment activity in many parts of the world. Karaoke machines are often found in various entertainment establishments or venues, such as, but not limited to, restaurants, pubs, bars, and theaters. Content used with karaoke is prepared or programmed ahead of time and distributed, using a physical or electronic medium, to karaoke users. The preparation includes processing the song to extract the vocal content, generating a separate visual lyric track, combining the lyric track with the modified audio music content, and storing the combined content on a medium, such as a hard drive, optical disc, or tape.

Automatic visual lyric track generation is a related field to automatic transcription of video files. This technical problem is discussed, for example, in "Automatic Subtitle Generation for Sound in Videos" a thesis of Boris Guenebaut, presented on 2nd May of 2009. However, the current mechanisms used for karaoke processing have some limitations. Karaoke users have a limited selection of song titles based on the availability of previously generated content. A user is not able to spontaneously perform karaoke using a song that has not been previously processed and is not otherwise available. Further, a user does not have the processing capability to generate karaoke content. As a result, the user is unable to create or generate karaoke content in a timely manner, making spontaneous karaoke difficult. Finally, some users may prefer to perform karaoke using a mobile or portable device rather than at an entertainment venue. Therefore, there is a need to address the shortcomings of current karaoke mechanisms and enable a user to automatically create karaoke content while listening to a music track and perform karaoke at any desired time.

### SUMMARY

According to an aspect of the present disclosure, a method for generating visual content from an audio signal is disclosed. The method includes receiving audio content, processing the audio content to separate the audio content into a first part of audio content and a second part of audio content, converting the second part of the audio content into visual content, delaying the audio content based on a time relationship between the audio content and the visual content, the delaying accounting for the time to process the first part of the audio content and convert the second part of the audio content, and providing the visual content for display on a display in conjunction with providing the audio for audible reproduction.

According to an aspect of the present disclosure, an apparatus for generating visual content from an audio signal is disclosed. The apparatus includes a source separation module that receives audio content and processes the audio content to separate the audio content into a first part of the audio content and a second part of the audio content, a converter module, coupled to the source separation module, the converter module converting second part of the audio content into visual content, and a synchronization module, coupled to the converter module, the synchronization module delaying the first part of the audio content based on a time relationship between the audio content and the visual content in order to account for the time to process the first part of the audio content and convert the second part of the audio content, the synchronization module further providing the visual content for display on a display in conjunction with providing the audio for audible reproduction.

The above presents a simplified summary of the subject matter in order to provide a basic understanding of some aspects of subject matter embodiments. This summary is not an extensive overview of the subject matter. It is not intended to identify key/critical elements of the embodiments or to delineate the scope of the subject matter. Its sole purpose is to present some concepts of the subject matter in a simplified form as a prelude to the more detailed description that is presented later.

### BRIEF DESCRIPTION OF THE DRAWINGS

These, and other aspects, features and advantages of the present disclosure will be described or become apparent from the following detailed description of the preferred embodiments, which is to be read in connection with the accompanying drawings.
FIG. 1 illustrates a block diagram of an exemplary system used to perform karaoke according to aspects of the present disclosure;
FIG. 2 illustrates a block diagram of an exemplary karaoke processor used in a karaoke system according to aspects of the present disclosure; and
FIG. 3 illustrates a flow chart of an exemplary process for creating a visual track from audio content according to aspects of the present disclosure.

It should be understood that the drawings are for purposes of illustrating the concepts of the disclosure and is not necessarily the only possible configuration for illustrating the disclosure.

### DETAILED DESCRIPTION OF PREFERRED EMBODIMENTS

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces. Herein, the phrase "coupled" is defined to mean directly connected to or indirectly connected with through one or more intermediate components. Such intermediate components may include both hardware and software based components.

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein represent conceptual views of illustrative circuitry embodying the principles of the disclosure. Similarly, it will be appreciated that any flow charts, flow diagrams, state transition diagrams, pseudocode, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, read only memory (ROM) for storing software, random access memory (RAM), and nonvolatile storage.

Other hardware, conventional and/or custom, may also be included. Similarly, any switches shown in the figures are conceptual only. Their function may be carried out through the operation of program logic, through dedicated logic, through the interaction of program control and dedicated logic, or even manually, the particular technique being selectable by the implementer as more specifically understood from the context.

In the claims hereof, any element expressed as a means for performing a specified function is intended to encompass any way of performing that function including, for example, a) a combination of circuit elements that performs that function or b) software in any form, including, therefore, firmware, microcode or the like, combined with appropriate circuitry for executing that software to perform the function. The disclosure as defined by such claims resides in the fact that the functionalities provided by the various recited means are combined and brought together in the manner which the claims call for. It is thus regarded that any means that can provide those functionalities are equivalent to those shown herein.

The present disclosure addresses problems associated with karaoke entertainment and, more specifically, issues with automatic, or on the fly, creation of visual content from audio content, such as lyric text or karaoke tracks. Current techniques involve an offline karaoke visual lyric track or subtitle generation process and limit the availability and capability of current karaoke systems. Users are limited to performing karaoke using only available processed content. Users are also further limited to using specialized equipment rather than mobile or portable devices that may be used anywhere. In order to address the problems, automatic generation of visual content, such as karaoke tracks, is described. Subtitles or lyrics may be created on the fly, simultaneously with the playback of the music, using speech-to-text recognizers. The subtitles or lyrics may further be displayed in advance so that a user has the time to read them before singing or repeating the lyrics. Also, the original audio track may be modified to reduce or preferably remove the original vocal track in order for the user to be able to sing or speak over the original track without being disturbed by the original vocal track.

Described herein are mechanisms for creating a visual media content structure (e.g., vocal lyrics or instrumental score) from audio content. The mechanisms may be used as part of a karaoke entertainment system. The received audio content is analyzed and a portion of the content (e.g., the main or background vocal track or an instrument track) is separated from the music. The separated or isolated portion is analyzed using a converter program. If the separated or isolated portion includes the vocal or singing portion, the portion is run through a speech to text converter. The remaining or main audio content portion may be buffered or time delayed in order to allow processing time for the converter. Following the conversion, time stamps are generated and attached to both the text portion and the main audio content and synchronization is performed by aligning the time stamps. A delay may be introduced in order to account for the time to process the received audio content and convert the portion (e.g., the main or background vocal track) of the audio content. A time presentation offset may further be applied in order to allow the user to read lyrics before the time to sing with the remaining audio portion. The main audio portion is provided to a sound reproduction system, (e.g., headphones or speakers) and the text display is provided to a display screen. The singing from the user's voice may also be provided to the sound reproduction system along with the main audio.

The principles of the present disclosure enable the generation and automatic creation of visual karaoke content with any audio content. The audio content may be streamed audio content on a media device that is also equipped with a display screen. The media device may be, but is not limited to, a television, a cellular phone, a game console, or a handheld media player with a display screen. The present disclosure enables the user to automatically create karaoke content on the fly on any of the above mentioned media devices or other similar devices that include the necessary functionality described below. It is important to note that aspects of the present disclosure may be similarly applied to processing any instrumental portion or tracks in the audio content in order to convert the instrumental portion or tracks to a visual track, such as a music score.

In the embodiments described herein, certain elements shown in the figures are well known and will not be described in further detail. It should also be noted that the present embodiments may be implemented using conventional programming techniques, which, as such, will not be described herein.

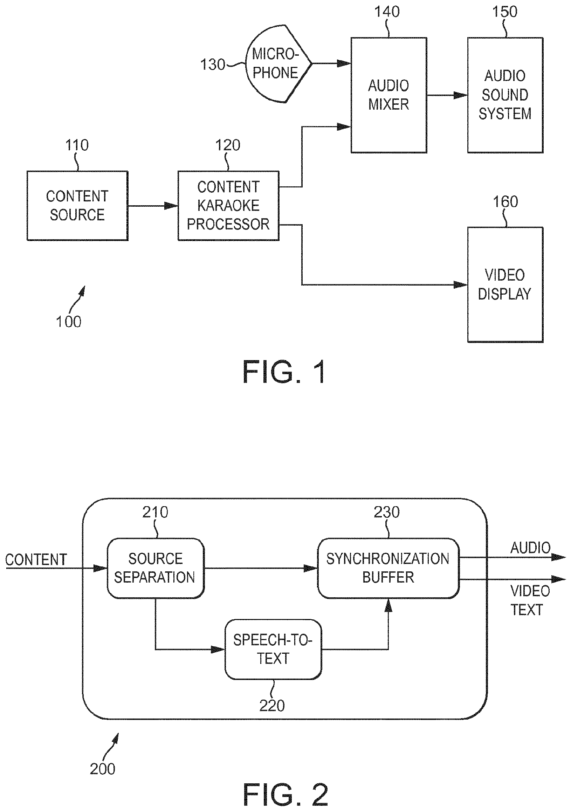

Turning to FIG. 1, a block diagram of an exemplary system 100 according to principles of the present disclosure is shown. System 100 may be used as part of a karaoke entertainment system often found in an entertainment venue.

Content (e.g., music, audio, or karaoke tracks) for use in system 100 is provided by content source 110. Content source 110 is connected to content karaoke processor 120. Content karaoke processor 120 is connected to both audio mixer 140 and video display 160. Video display 160 is used to show the karaoke or lyric tracks to a user or singer. A microphone 130 is also connected to audio mixer 140. Audio mixer 140 is connected to audio sound system 150. Audio sound system 150 audibly reproduces the content, usually with a portion removed and replaced with the user's or another singer's vocal singing.

Content source 110 may include a storage device for maintaining a plurality of elements or programs of content. The content source 110 may include permanent or removable storage elements including, but not limited to, a hard disk drive, optical disk drive, or magnetic tape drive. Content source 110 may also include a wired or wireless connection to a network, such as a local area network or wide area network. A network connection allows live, broadcast, or streaming content to be used as the content source. Content may be provided in any of several possible formats, including analog audio, digital uncompressed audio, or digital compressed audio. Further, some content may include a separate visual or lyric track used with the content as part of karaoke entertainment in system 100.

Content karaoke processor 120 receives content from content source 110 and processes the content for use as part of karaoke entertainment. Content karaoke processor 120 may include one or more audio decoders or analog to digital converters for processing the content. Content karaoke processor 120 may also include an audio signal separator that processes the audio content in order to separate the vocal portion of the content. Content karaoke processor 120 may include a speech to text converter that processes the vocal portion of the content to produce a visual signal or portion that includes the text or lyrics representing the vocal portion of the content. Content karaoke processor 120 may also include a synchronization circuit that processes the remaining portion of the content and the visual representation of the vocal portion of the content in order to allow playback and reproduction as a karaoke entertainment system.

Audio mixer 140 receives the remaining portion of the content (i.e., the portion with the vocal portion removed) and allows other audio content to be combined to produce a combined audio signal. The other audio content may include, for instance, the vocal singing by the user or singer provided through microphone 130. Audio mixer 140 may allow an adjustment of the level of the vocal singing as part of combining with the remaining portion of the content.

Audio sound system 150 receives the combined audio signal from audio mixer 140 and acoustically reproduces the signal to be heard by the user or singer. If system 100 is used as part of an entertainment venue, audio sound system 150 also allows others at the venue to hear the content as well. Audio sound system 150 may include one or more audio amplifiers for amplifying the combined signal along with one or more speakers for acoustically reproducing the amplified signal.

Video display 160 displays the visual representation of the vocal portion of the content to the user or singer. The visual signal may include a series or one or more screens including the lyrics and any timing indicator associated with the reproduced audio. Video display 160 may also include inputs for other video signals as well. The visual signal may be displayed as an overlay with another video signal.

In operation, a user selects a musical selection from content source 110 in system 100. The content source 110 supplies an analog audio track with the vocal portion removed along with a separate lyric track to content karaoke processor 120 based on the musical selection. Content karaoke processor 120 assures synchronization between the audio track and the lyric track and supplies the audio track to audio mixer 140 and the lyric track to video display 160. The user views the lyric track on video display 160 and sings into microphone 130. The user's vocal signal from microphone 130 is combined with the audio track in audio mixer 140 and provided for reproduction using audio sound system 150.

It is important to note that all of the elements in system 100 may be included in one device. The device may be referred to as a karaoke machine. In some embodiments, microphone 130 may be detachable from the device. In a different embodiment, portions of system 100 may be included in a portable device. The portable device may include a small video display, similar to video display 160 and small audio sound system, using headphones, similar to audio sound system 150. The portable device may not include a microphone 130 or audio mixer 140. Using the portable device, a user may listen to an audio track retrieved from the content source or streamed to the device that is not a karaoke audio track. The user decides to perform karaoke and activates the karaoke functionality (e.g., in content karaoke processor 120) on the portable device. The audio track is processed in content karaoke processor 120 by placing the content in a small storage memory or buffer that enables all processing to be carried out. The audio track is analyzed, a voice portion is removed or separated, the voice portion is transcribed to create a visual portion, and visual subtitles or lyrics created from the visual portion. A synchronization circuit synchronizes the display of the subtitles or lyrics according to the audio track, now modified with the vocal track removed. The visual subtitles or lyrics are displayed while the modified audio is played in place of the original audio track. Further details regarding the steps for automatic, or on the fly, generation of visual content from audio content, such as karaoke processing, is described below.

Turning to FIG. 2, a block diagram of a karaoke processor 200 according to aspects of the present disclosure is shown. Karaoke processor 200 works similar to content karaoke processor 120 described in FIG. 1. Further, karaoke processor 200 may be included in a larger signal processing circuit and used as part of a larger device, including, but not limited to, a karaoke machine, game console, computer, set top box, cellular phone, tablet, or multimedia player.

Content is provided to karaoke processor 200 at source separation module 210. Source separation module 210 connects to both speech to text converter 220 and synchronization buffer module 230. Speech to text converter module 220 also connects to synchronization buffer module 230. Synchronization buffer module 230 provides an audio output as well as a video output from karaoke processor 200.

Content, such as an audio signal, that may be streamed from a network or retrieved from a content source (e.g., content source 110 described in FIG. 1) is provided to source separation module 210. Source separation module 210 isolates the voice from the audio track and removes it so as to produce a processed audio signal that does not include the voice or vocal region. The source separation module 210 also produces an audio signal that only contains the voice audio portion.

Source separation or source extraction techniques are known. For instance, simple source separation or extraction systems may include filters and signal combining circuits that attempt to isolate certain portions of audio content (e.g., the voice portion) by filtering certain portions of the frequency spectrum of the audio content and/or adding and subtracting the two audio image signals in stereophonic audio content. While this separation and extraction technique may be able to produce a result in real time or near real time, the performance is usually very poor. The relative frequency range for the voice portion may not be constant and other portions of audio content may be present in the same frequency range and/or stereophonic image position as the voice portion.

Other improved source separation techniques are preferred. In one embodiment, source separation module 210 includes circuitry to implement a generalized expectation-maximization (GEM) algorithm, where the maximization, or M-step, is solved by alternating optimization of different parameter subsets. The optimization further takes the corresponding constraints into account and uses multiplicative update (MU) rules inspired from the nonnegative matrix factorization (NMF) methodology to update the nonnegative spectral parameters. In essence, all of the audio content (e.g., the vocal portions, the various instrumental portions) may be modeled by NMF models or dictionaries of nonnegative spectral patterns. Moreover, in case of stereophonic or other spatial multi-point audio, spatial models may be used as filters or separators for modeling source positions within the recording. All the models (NMF source models and spatial models) are continuously updated or re-estimated using GEM algorithm with MU rules so as to better fit the model to the current audio signal properties. Finally, given the estimated model parameters, any portion of the audio signal (e.g., vocals or accompaniment music) may be extracted using time-varying adaptive filtering (e.g., Wiener filtering). The time-varying adaptive filtering, as opposed to time-invariant filtering mentioned above, is better adapted to local signal properties and greatly improves the quality of extracted signals. It is important to note that that the model estimation used in source separation module 210 is performed within a processor or processing circuits in source separation module 210 and in real time or near real time.

Speech to text converter module 220 takes the voice audio signal and transcribes the voice portion into text using a speech recognition algorithm. Speech to text converter module 220 may use one or more several possible speech recognition algorithms. In a preferred embodiment, speech to text converter module 220 uses a speech recognition algorithm based on Hidden Markov Models (HMMs). HMMs are statistical models that output a sequence of symbols or quantities. The separated vocal portion or track may be augmented by source separation uncertainties. Source separation uncertainties may include information about the errors of source separation provided from a source separation module (e.g., source separation module 210) indicating where separation worked well and where it did not. Speech or other audio recognition systems, including systems based on HMMs, may benefit or take a performance gain from this additional information to improve recognition performance.

In another embodiment, speech to text converter module 220 may include an input for providing some form of separate visual or lyric information associated with the audio content. The speech recognition algorithm, (e.g., the HMMs) may take the additional information into account with the statistical model to improve recognition. The approach is called "lyrics recognition from a singing voice". Further, the speech to text converter module 220 may include the ability to detect when some parts of the audio content are repeated (e.g., a chorus in a song). The speech to text converter module 220 may further detect repetitions in the transcribed text and improve the recognition by combining results of the recognition on all repetitions of the same segment.

Speech to text converter module 220 further includes a segmentation mechanism for the text. The segmentation system breaks phrases and words into smaller segments, including syllabic segments. The segmentation mechanism allows positioning of the words or phrases generated by speech to text converter module 220 to be aligned with actual voice reproduction with respect to the voice portion of the audio content when processed as segments. The segmentation mechanism forms a tempo and cadence for the words or phrases that may be associated with the vocal portion of the audio content. A time base may also be established in speech to text converter module 220 for the vocal portion of the audio content to facilitate the positioning and alignment and may include the time and cadence information. The time base established for the vocal portion may also be used as part of the processing of the remaining or main portion of the audio content.

It is important to note that aspects of the audio separation and speech recognition described in source separation module 210 and speech to text converter module 220 may be performed in a combined circuit block. Further, the speech recognition may be performed without using source separation, thereby bypassing or eliminating source separation module 210. However, recognition may be more challenging and result in more processing time or lower performance when not using audio separation depending on the actual audio content.

Synchronization buffer module 230 receives both the separated audio and the translated text information and generates timestamps for each. Based on the audio signal, timestamps are used for marking and segmenting the transcribed text. As described above, timestamps for the voice portion of the audio content may be generated in speech to text converter module 220. The timestamps, which may be different from timestamps generated for the original audio content, may be regenerated to include any adjustments necessary for synchronization with the remaining or main portion of the audio content.

Further, synchronization buffer module 230 may adjust the relative timing position of the timestamps between the voice portion and the remaining or main portion of the audio content prior to delivery using a time offset that will allow the user to read the subtitle shortly in advance. The subtitle may be displayed as soon as the audio segment corresponding to the previous subtitle has been played. The subtitle may also be displayed at a time before the audio segment (e.g., a few milliseconds to a few seconds) corresponding to this subtitle is starting to be played. The synchronization buffer waits for the audio track and the subtitles to be ready and then transmits them to the loudspeakers and the display screen.

Some aspects of the synchronization that is performed in synchronization module 230 may be provided by source separation module 210. For example, source separation module 210 may generate and provide timing indicators for synchronization. Based on the audio signal, timestamps, along with timing indicators, may be used for marking and segmenting the transcribed text (e.g., in speech to text converter module 220). Using the timing indicators in this manners helps to ensure that the generated text can be synchronized with the audio. The timing indicators may also allow highlighting the just audible position in in the audio content for the sung text on the syllabic level to indicate the exact position in the text to the user.

It is important to note that karaoke processor 200 may be embodied as separate standalone devices or as a single standalone device. Each of the elements in karaoke processor 200, although described as modules, may be individual circuit elements within a larger circuit, such as an integrated circuit, or may further be modules that share common processing circuit in the larger circuit. Karaoke processor 200 may also be incorporated into a larger device, such as a microprocessor, microcontroller, or digital signal processor. Further one or more the blocks described in karaoke processor 200 may be implemented in software or firmware that may be downloaded and include the ability to be upgraded or reconfigured.

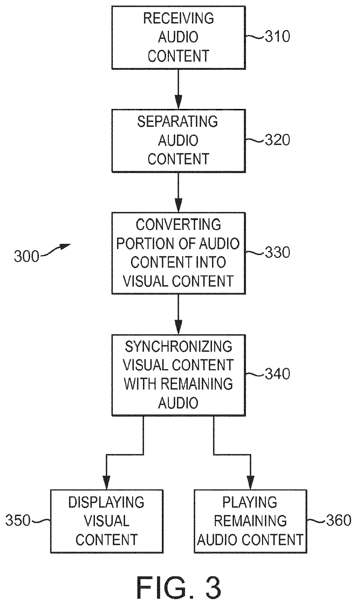

Turning to FIG.3, a flow chart illustrating a process 300 for generating visual content from audio content according to aspects of the present disclosure is shown. Process 300 describes an automatic or on the fly karaoke lyric generation process. Process 300 will primarily be described in terms of the karaoke processor 200 described in FIG. 2. Process 300 may also be used as part of the operation of system 100. Some or all of the steps of process 300 may be suitable for use in devices, such as karaoke machines used in entertainment venues. Some or all of the steps of process 300 may be suitable for use in home entertainment device including, but not limited to, televisions, computers gaming consoles, set top boxes, or digital audio/video disk players. Further, some or all of the steps of process 300 may be suitable for use in portable devices including, but not limited to cellular phones, handheld gaming devices, portable media players, and tablets. It is also important to note that some steps in process 300 may be removed or reordered in order to accommodate specific embodiments associated with the principles of the present disclosure.

Process 300 begins, at step 310, by receiving audio content. The audio content may be streaming or broadcast audio content. The audio content may also be received from a content source (e.g., content source 110 described in FIG. 1). The audio content may be in any format, such as analog, uncompressed digital, or compressed digital format. In a preferred embodiment, the content is received in motion picture entertainment group (MPEG) standard MPEG-2 audio layer III (MP-3).

At step 320, the received audio content is separated. The audio content is separated into a first portion that contains primarily only the vocal content from the audio content. The separation, at step 320, also creates a remaining portion that contains the audio content with primarily the vocal content removed. In one embodiment, the separation, at step 320, uses a GEM algorithm with alternating optimization of different parameter subsets and time-varying adaptive filtering, as described earlier. The separation, at 320, may also include any additional input processing, such as analog to digital conversion, and digital compressed signal decoding. In a preferred embodiment, the separation, at step 320 includes decoding the received content using an MP-3 decoder to produce an uncompressed digital audio signal prior to separation. It is important to note that that the separation, at step 320, is performed in real time or near real time.

At step 330, the first portion (e.g., a vocal portion) from the separation, at step 320, is converted into a visual content that is representative of the first audio portion. The conversion, at step 330, may use one more speech to text conversion techniques. The visual content may be the lyrics sung or spoken as part of the original audio content and separated into the first portion, at step 320. In a preferred embodiment, the conversion, at step 330, uses a speech recognition based on HMMs, as described earlier. The conversion, at step 330, may also be augmented by the use of additional visual information (e.g., lyric information for the audio content) in combination with speech recognition and by the use of repetition recognition, as described earlier, in order to improve performance. The conversion, at step 330, may be performed by speech to text converter module 220 described in FIG. 2.

The conversion, at step 330, may further include segmenting the visual content. Segmenting allows the visual content to be broken into sections (e.g., phrases, words, syllables) and allows alignment of the sections with the audible signal from the first portion of, or the entire, audio signal. As a result, a tempo and cadence for the visual content is created that is associated with the audio content.

It is important to note that any time delays associated with the separation, at step 320, or conversion, at step 330, are accounted and compensated for by storing or buffering all or portions of the audio content during process 300.

Next, at step 340, the converted visual content (e.g., lyric content) is synchronized with the remaining portion of the audio content. The synchronization, at step 340, includes generating time stamps for the remaining portion of the audio content and generating separate time stamps for the visual content associated with the first portion of the audio content. It is important to note that, in some embodiments, the synchronization, at step 340, may involve primarily delaying the audio content (e.g., the remaining portion of the audio content) based on a time structure and to compensate for the processing delay associated with generating the visual content. As such, the synchronization, at step 340, may be described as a delaying step.

The synchronization, at step 340, may also introduce an additional delay to the remaining portion of the audio content based on the timestamps. The additional delay allows the visual content to be displayed at the same time as, or in advance of, the audible playback or reproduction of the remaining portion of the audio content so that the user has the time to read the visual content before having to speak or sing the content in conjunction with the audible reproduction. Timing indicators may also be processed to allow highlighting the just sung text on the syllabic level to indicate the exact position in the text to the user. Synchronization, at step 340, may include buffering in the form of storage for the audio content as well as the visual content based on timestamps. The buffering may include delaying the audio content and/or video content until both are ready (e.g., based on timestamps) and then provides them to the audio reproduction system and the display screen. The synchronization, at step 340, may be performed by synchronization buffer module 230.

At step 350, the visual content is provided for display. The visual content may be displayed on a display device, such as display device 160 described in FIG. 1. The visual content may also be displayed as an overlay with other visual content. The visual content may also be displayed on a user interface screen, such as a cellular phone display screen.

At step 360, and at the same time as the visual content display, at step 350, the remaining audio portion is provided for audio reproduction. The remaining audio portion will have been delayed in time during synchronization, at step 340, in order to be delivered at an appropriate time with respect to the visual display, at step 350.

All or a portion of process 300 may further be incorporated into a computer readable medium including but not limited to,
An automatic visual content or karaoke generation process, such as described in process 300, may be encompassed as part several different uses. In one embodiment based on process 300, a user begins playing and listening to an audio track using a device, such as a cellular phone. The user decides to play karaoke and activates the functionality on the device. The audio track is put in a memory to buffer the signal and allow the processing steps in process 300 to be carried out. The audio track is then analyzed and modified on the fly. The voice content is removed and transcribed so that lyric subtitles may be created. The device then displays the lyric subtitles on a screen on the device, synchronized according to the audio track. The audio track, now with the voice removed, remains being played.

In another embodiment, a user may wish to sing along with, or in place of, the main singer while watching a television program or a recorded video program (e.g., a program on a digital video disc). The audio content that is provided along with television or recorded video program may be processed using the steps of process 300 as described above. The video portion of the television program may also need to be delayed in order to be able to process the audio stream as it is received avoid displaying the video before for the corresponding visual subtitles can be displayed. The generated subtitles may be superimposed on the video, displayed on a different part of the display screen, displayed on separate (e.g., on a separate device).

In a further embodiment, a user may wish to keep the voice portion of the audio content as part of the audio output signal but would like visual content (e.g., karaoke subtitles or lyrics) to be displayed. A user selection may be included to provide the original audio content synchronized with the visual content instead of the remaining or modified portion of audio content with the vocal portion removed. An additional user selection may allow for language translations of the converted text.

In yet another embodiment, a vocal dubbing mechanism, such as used in alternate language dubbing, may use one or more of the steps of process 300. The voice to be dubbed over is removed and pronounced words are displayed in advance of the audible position in the content so that the dubbing voice is able to directly translate and/or read out loud the translated words or subtitles.

Finally, an embodiment, such as system 100, may include a recording circuit. The recording circuit may be coupled to the audio output (e.g., audio mixer 140 or audio sound system 150 described in FIG. 1) as well as a storage medium (e.g., content source 110 described in FIG. 1). The recording circuit allows a recording of the karaoke output (i.e., the user's singing along with the remaining portion of the audio content with the voice portion removed) to be made and stored for future playback.

Aspects of the present disclosure may also be used to create visual content representing a different portion of the audio content, other than the voice portion. The principles of the present disclosure may be used to separate the audio portion or track for a given instrument (e.g. violin, drums, guitar, or bass). A visual representation of notes played by the given instrument may be generated using a different audio to visual transcription or converter system. The notes, note patterns, or harmonies that were played by that instrument may be displayed to a musician that desires to play those notes in a manner similar to how the subtitles or lyrics were displayed for a singer. Further the notes, note patterns, or harmonies and notes may be displayed as images (e.g., using an image of a music staff, a tablature staff, or keyboard with colored keys, etc.). The visual music score system described here may also be helpful in conjunction with a music e-learning process.

All or a portion of process 300 may further be incorporated into a computer readable medium. The computer readable medium may be non-transient and my include, but is not limited to, hard disk drive, a compact disc, a digital versatile disk, or a memory circuit. In one embodiment, the computer readable medium may include program instructions for causing a device capable of reading the computer readable medium (e.g., a computer) to perform one or more of the steps described in process 300. The computer readable medium may further include program instructions for carrying out any of the variations or additional aspects related to the present embodiments described herein.

Described herein are mechanisms for converting a streaming or otherwise retrieved and provided audio signal into a karaoke-like signal having a visual (e.g., lyric) display on an audio device that is also equipped with a display screen. For example, the audio device may be a television, a cellular phone, or an mp3-player with screen. The mechanisms enable the user to automatically create karaoke content on the fly or in real time. To this end, voice(s) or other audio content is/are separated from the original audio signal using audio source separation techniques. One or more voices or audio content may also be removed from the original audio signal. Using speech recognition techniques, the separated audio content may be analyzed and transcribed into visual content (e.g., text, lyrics, music score) for display. Based on the rhythm of the audio signal and/or the removed audio content, the text may be split into segments that could serve as karaoke lyric subtitles or a music score arrangement. Using a time buffer and timestamps for synchronizing the audio track with the subtitles or music score, the subtitles or music score are displayed on the screen of the display in relation to playback or audio reproduction of the audio signal (e.g., the original audio signal or the original audio signal with a portion of audio content removed).

The principles of the present disclosure describe a method and apparatus for generating or creating a visual (vocal or instrumental) content structure from ordinary audio content, in a manner similar to karaoke. The received audio content is analyzed and a portion of the content (e.g., the main or background vocal track or an instrument track) is separated from the music. Next the isolation portion is analyzed using a converter program. The conversion creates visual content using the portion of the audio content, the visual content having a relationship to the portion of the audio content. For vocal karaoke, the vocal track is run through a speech to text converter. It is noted that the converter may need to take some time, so the main audio content may be buffered. Following the conversion, time stamps are attached to both the text portion and the main audio content and a time stamp alignment is created. The time stamps allow for delaying the audio content based on a time relationship between the audio content and the created visual content. The main audio is provided to speakers and the text display is provided to a display screen. As a result, the user is able to see and read the created visual content while the audio is being played. A similar mechanism may be created for instrumental tracks using sound to music score techniques.

Although embodiments which incorporate the teachings of the present disclosure have been shown and described in detail herein, those skilled in the art can readily devise many other varied embodiments that still incorporate these teachings. Having described preferred embodiments of an apparatus and method for generating visual content from audio content (which are intended to be illustrative and not limiting), it is noted that modifications and variations can be made by persons skilled in the art in light of the above teachings. It is therefore to be understood that changes may be made in the particular embodiments of the disclosure disclosed which are within the scope of the disclosure as outlined by the appended claims.

## Claims

1. A method (300) comprising:
receiving (310) audio content;
processing (320) the received audio content to separate the audio content into a first part of audio content and a second part of audio content;
converting (330) the second part of the audio content into visual content;
delaying (340) the first part of the audio content based on a time relationship between the audio content and the visual content, the delaying accounting for the time to process the received audio content and convert the second part of the audio content, the time relationship based on generating a time stamp for the visual content that is based on the second part of the audio content and generating a time stamp for the first part of the audio content; and
providing (350) the visual content for display on a display in conjunction with providing (360) the first part of the audio content for audible reproduction.

2. The method (300) of claim 1, wherein the method (300) is performed by a portable device.

3. The method (300) of any of claims 1 or 2, wherein the method (300) is performed in real time with respect to providing the first part of the audio content for audible reproduction.

4. An apparatus (200) for processing audio content, comprising:
a source separation module (210) receiving audio content and processing the received audio content to separate the received audio content into a first part of the audio content and a second part of the audio content;
a converter module (220), coupled to the source separation module (210), the converter module (220) converting the second part of the audio content into visual content; and
a synchronization module (230), coupled to the converter module (220), the synchronization module (230) delaying the audio content based on a time relationship between the received audio content and the visual content in order to account for the time to process the received audio content and convert the second part of the audio content, the time relationship based on generating a time stamp for the visual content that is based on the second part of the audio content and generating a time stamp for the first part of the audio content, the synchronization module (230) further providing the visual content for display on a display in conjunction with providing the first part of the audio content for audible reproduction.

5. The apparatus (200) of claim 4, wherein the apparatus is a portable device.

6. The apparatus (200) of claims 4 or 5, wherein the apparatus processes the audio content in real time with respect to providing the first part of the audio content for audible reproduction.

7. The method (300) of any of the claims 1-3 or the apparatus (200) of any of the claims 4-6, wherein the visual content is lyric text representing the second part of the audio content and wherein the second part of the audio content is a vocal portion of the audio content.

8. The method (300) of any of the claims 1-3 and 7 or the apparatus (200) of any of the claims 4-7, wherein the visual content is provided for display at a predetermined time before the first part of the audio content is provided for audible reproduction based on the time stamp for the visual content and the time stamp for the first part of the audio content.

9. The method (300) of any of the claims 1-3 and 7-8 or the apparatus (200) of any of the claims 4-8, wherein converting further includes segmenting the visual content based on the second part of the audio content, the segmenting creating a cadence and tempo for the visual content.

10. The method (300) of any of the claims 1-3 and 7-9 or the apparatus (200) of any of the claims 4-9, wherein processing uses a generalized expectation maximization algorithm.

11. The method (300) of any of the claims 1-3 and 7-10 or the apparatus (200) of any of the claims 4-10, wherein processing uses adaptive time-varying filtering.

12. The method (300) of any of the claims 1-3 and 7-11 or the apparatus (200) of any of the claims 4-11, wherein converting uses an algorithm based on hidden Markov models.

13. The method (300) of any of the claims 1-3 and 7-12 or the apparatus (200) of any of the claims 4-12, wherein the received audio content is streaming content from at least one of a broadcast source or an internet source.

14. The method (300) of any of the claims 1-3 and 7-12 or the apparatus (200) of any of the claims 4-12, wherein the received audio content is recorded content from at least one of a magnetic hard disk drive, a solid state storage device, and an optical disk drive.

15. A computer readable data carrier having stored thereon instructions which when executed by a computing device cause the computing device to carry out the method of any one of claims 1-3 and 7-14.

## Patentansprüche

1. Verfahren (300), das umfasst:
Empfangen (310) von Audioinhalt;
Verarbeiten (320) des empfangenen Audioinhalts, um den Audioinhalt in einen ersten Teil Audioinhalt und in einen zweiten Teil Audioinhalt zu trennen;
Umsetzen (330) des zweiten Teils des Audioinhalts in visuellen Inhalt;
Verzögern (340) des ersten Teils des Audioinhalts auf der Grundlage einer Zeitbeziehung zwischen dem Audioinhalt und dem visuellen Inhalt, wobei die Verzögerung die Zeit zum Verarbeiten des empfangenen Audioinhalts und zum Umsetzen des zweiten Teils des Audioinhalts berücksichtigt, wobei die Zeitbeziehung auf dem Erzeugen eines Zeitstempels für den visuellen Inhalt, der auf dem zweiten Teil des Audioinhalts beruht, und auf dem Erzeugen eines Zeitstempels für den ersten Teil des Audioinhalts beruht; und
Bereitstellen (350) des visuellen Inhalts zur Anzeige auf eine Anzeige zusammen mit dem Bereitstellen (360) des ersten Teils des Audioinhalts für die hörbare Wiedergabe.

2. Verfahren (300) nach Anspruch 1,
wobei das Verfahren (300) durch eine tragbare Einrichtung ausgeführt wird.

3. Verfahren (300) nach Anspruch 1 oder 2,
wobei das Verfahren (300) in Bezug auf das Bereitstellen des ersten Teils des Audioinhalts für die hörbare Wiedergabe in Echtzeit ausgeführt wird.

4. Vorrichtung (200) zum Verarbeiten von Audioinhalt, wobei die Vorrichtung umfasst:
ein Quellentrennungsmodul (210), das Audioinhalt empfängt und den empfangenen Audioinhalt verarbeitet, um den empfangenen Audioinhalt in einen ersten Teil des Audioinhalts und in einen zweiten Teil des Audioinhalts zu trennen;
ein Umsetzermodul (220), das mit dem Quellentrennungsmodul (210) gekoppelt ist, wobei das Umsetzermodul (220) den zweiten Teil des Audioinhalts in visuellen Inhalt umsetzt; und
ein Synchronisationsmodul (230), das mit dem Umsetzermodul (220) gekoppelt ist, wobei das Synchronisationsmodul (230) den Audioinhalt auf der Grundlage einer Zeitbeziehung zwischen dem empfangenen Audioinhalt und dem visuellen Inhalt verzögert, um die Zeit zum Verarbeiten des empfangenen Audioinhalts und zum Umsetzen des zweiten Teils des Audioinhalts zu berücksichtigen, wobei die Zeitbeziehung auf dem Erzeugen eines Zeitstempels für den visuellen Inhalt, der auf dem zweiten Teil des Audioinhalts beruht, und auf dem Erzeugen eines Zeitstempels für den ersten Teil des Audioinhalts beruht, wobei das Synchronisationsmodul (230) ferner den visuellen Inhalt zur Anzeige auf einer Anzeige zusammen mit dem Bereitstellen des ersten Teils des Audioinhalts zur hörbaren Wiedergabe bereitstellt.

5. Vorrichtung (200) nach Anspruch 4, wobei die Vorrichtung eine tragbare Einrichtung ist.

6. Vorrichtung (200) nach Anspruch 4 oder 5, wobei die Vorrichtung den Audioinhalt in Bezug auf das Bereitstellen des ersten Teils des Audioinhalts zur hörbaren Wiedergabe in Echtzeit verarbeitet.

7. Verfahren (300) nach einem der Ansprüche 1-3 oder Vorrichtung (200) nach einem der Ansprüche 4-6, wobei der visuelle Inhalt ein Liedtext ist, der den zweiten Teil des Audioinhalts repräsentiert, und wobei der zweite Teil des Audioinhalts ein Stimmteil des Audioinhalts ist.

8. Verfahren (300) nach einem der Ansprüche 1-3 und 7 oder Vorrichtung (200) nach einem der Ansprüche 4-7, wobei auf der Grundlage des Zeitstempels für den visuellen Inhalt und des Zeitstempels für den ersten Teil des Audioinhalts der visuelle Inhalt zur Anzeige zu einem vorgegebenen Zeitpunkt bereitgestellt wird, bevor der erste Teil des Audioinhalts zur hörbaren Wiedergabe bereitgestellt wird.

9. Verfahren (300) nach einem der Ansprüche 1-3 und 7-8 oder Vorrichtung (200) nach einem der Ansprüche 4-8, wobei das Umsetzen ferner das Segmentieren des visuellen Inhalts auf der Grundlage des zweiten Teils des Audioinhalts enthält, wobei das Segmentieren einen Rhythmus und ein Tempo für den visuellen Inhalt erzeugt.

10. Verfahren (300) nach einem der Ansprüche 1-3 und 7-9 oder Vorrichtung (200) nach einem der Ansprüche 4-9, wobei die Verarbeitung einen verallgemeinerten Erwartungsmaximierungsalgorithmus verwendet.

11. Verfahren (300) nach einem der Ansprüche 1-3 und 7-10 oder Vorrichtung (200) nach einem der Ansprüche 4-10, wobei die Verarbeitung eine adaptive zeitlich veränderliche Filterung verwendet.

12. Verfahren (300) nach einem der Ansprüche 1-3 und 7-11 oder Vorrichtung (200) nach einem der Ansprüche 4-11, wobei das Umsetzen einen Algorithmus verwendet, der auf Hidden-Markov-Modellen beruht.

13. Verfahren (300) nach einem der Ansprüche 1-3 und 7-12 oder Vorrichtung (200) nach einem der Ansprüche 4-12, wobei der empfangene Audioinhalt Streaming-Inhalt von einer Rundfunkquelle und/oder von einer Internetquelle ist.

14. Verfahren (300) nach einem der Ansprüche 1-3 und 7-12 oder Vorrichtung (200) nach einem der Ansprüche 4-12, wobei der empfangene Audioinhalt aufgezeichneter Inhalt von einem magnetischen Festplattenlaufwerk und/oder von einer Festkörperspeichereinrichtung und/oder von einem optischen Plattenlaufwerk ist.

15. Computerlesbarer Datenträger, auf dem Anweisungen gespeichert sind, die, wenn sie durch eine Computereinrichtung ausgeführt werden, veranlassen, dass die Computereinrichtung das Verfahren nach einem der Ansprüche 1-3 und 7-14 ausführt.

## Revendications

1. Procédé (300) comprenant :
la réception (310) de contenu audio ;
le traitement (320) du contenu audio reçu pour séparer le contenu audio en une première partie du contenu audio et une deuxième partie du contenu audio ;
la conversion (330) de la deuxième partie du contenu audio en contenu visuel ;
le retardement (340) de la première partie du contenu audio en fonction d'une relation temporelle entre le contenu audio et le contenu visuel, le retardement tenant compte du temps nécessaire pour traiter le contenu audio reçu et convertir la deuxième partie du contenu audio, la relation temporelle étant basée sur la génération d'un horodatage pour le contenu visuel basé sur la deuxième partie du contenu audio et la génération d'un horodatage pour la première partie du contenu audio ; et
la fourniture (350) du contenu visuel pour affichage sur un écran conjointement à la fourniture (360) de la première partie du contenu audio pour reproduction audible.

2. Procédé (300) selon la revendication 1,
dans lequel le procédé (300) est mis en oeuvre par un dispositif portable.

3. Procédé (300) selon l'une quelconque des revendications 1 à 2,
dans lequel le procédé (300) est mis en oeuvre en temps réel par rapport à la fourniture de la première partie du contenu audio pour reproduction audible.

4. Appareil (200) pour traiter du contenu audio, comprenant :
un module de séparation source (210) recevant du contenu audio et traitant le contenu audio reçu pour séparer le contenu audio reçu en une première partie du contenu audio et une deuxième partie du contenu audio ;
un module de conversion (220), couplé au module de séparation source (210), le module de conversion (220) convertissant la deuxième partie du contenu audio en contenu visuel ; et
un module de synchronisation (230), couplé au module de conversion (220), le module de synchronisation (230) retardant le contenu audio en fonction d'une relation temporelle entre le contenu audio reçu et le contenu visuel afin de tenir compte du temps nécessaire pour traiter le contenu audio reçu et convertir la deuxième partie du contenu audio, la relation temporelle étant basée sur la génération d'un horodatage pour le contenu visuel basé sur la deuxième partie du contenu audio et la génération d'un horodatage pour la première partie du contenu audio, le module de synchronisation (230) fournissant en outre le contenu visuel pour affichage sur un écran conjointement à la fourniture de la première partie du contenu audio pour reproduction audible.

5. Appareil (200) selon la revendication 4, dans lequel l'appareil est un dispositif portable.

6. Appareil (200) selon la revendication 4 ou 5, dans lequel l'appareil traite le contenu audio en temps réel par rapport à la fourniture de la première partie du contenu audio pour reproduction audible.

7. Procédé (300) selon l'une quelconque des revendications 1 à 3 ou appareil (200) selon l'une quelconque des revendications 4 à 6, dans lequel le contenu visuel correspond à des paroles représentant la deuxième partie du contenu audio et dans lequel la deuxième partie du contenu audio est une partie vocale du contenu audio.

8. Procédé (300) selon l'une quelconque des revendications 1 à 3 et 7 ou appareil (200) selon l'une quelconque des revendications 4 à 7, dans lequel le contenu visuel est fourni pour affichage à un moment prédéterminé avant la fourniture de la première partie du contenu audio pour reproduction audible en fonction de l'horodatage pour le contenu visuel et de l'horodatage pour la première partie du contenu audio.

9. Procédé (300) selon l'une quelconque des revendications 1 à 3 et 7 à 8 ou appareil (200) selon l'une quelconque des revendications 4 à 8, dans lequel la conversion inclut en outre la segmentation du contenu visuel en fonction de la deuxième partie du contenu audio, la segmentation créant une cadence et un tempo pour le contenu visuel.

10. Procédé (300) selon l'une quelconque des revendications 1 à 3 et 7 à 9 ou appareil (200) selon l'une quelconque des revendications 4 à 9, dans lequel le traitement utilise un algorithme espérance-traitement généralisé.

11. Procédé (300) selon l'une quelconque des revendications 1 à 3 et 7 à 10 ou appareil (200) selon l'une quelconque des revendications 4 à 10, dans lequel le traitement utilise un filtrage adaptatif variable dans le temps.

12. Procédé (300) selon l'une quelconque des revendications 1 à 3 et 7 à 11 ou appareil (200) selon l'une quelconque des revendications 4 à 11, dans lequel la conversion utilise un algorithme basé sur des modèles de Markov cachés.

13. Procédé (300) selon l'une quelconque des revendications 1 à 3 et 7 à 12 ou appareil (200) selon l'une quelconque des revendications 4 à 12, dans lequel le contenu audio reçu est du contenu en streaming provenant d'au moins une source de diffusion ou une source Internet.

14. Procédé (300) selon l'une quelconque des revendications 1 à 3 et 7 à 12 ou appareil (200) selon l'une quelconque des revendications 4 à 12, dans lequel le contenu audio reçu est du contenu enregistré à partir d'au moins un disque dur magnétique, un dispositif de stockage à semi-conducteurs ou un disque optique.

15. Support de données lisible sur ordinateur sur lequel sont stockées des instructions qui, lorsqu'elles sont exécutées par un dispositif informatique, indiquent au dispositif informatique de mettre en oeuvre le procédé selon l'une quelconque des revendications 1 à 3 et 7 à 14.
